# EUROPEAN PATENT SPECIFICATION

(11) **EP 4 403 133 B1**
(45) Date of publication and mention of the grant of the patent: **11.03.2026**
(21) Application number: 24151907.3
(22) Date of filing: 15.01.2024
(51) Int. Cl.: A61C 17/06

(54) **SALIVA EJECTOR**
SPEICHELEJEKTOR
EJECTEUR DE SALIVE

(30) Priority: 17.01.2023 IT 202300000156 U
(43) Date of publication of application: 24.07.2024
(73) Proprietor: Tardelli, Enio, 55025 Coreglia Antelminelli (LU) (IT)
(72) Inventor: TARDELLI, Enio, 55025 Coreglia Antelminelli (IT)
(74) Representative: Mari, Marco Giovanni

(56) References cited:
- EP-B1- 2 953 577

## Description

### Technical field

The present invention refers to the field of dental instruments and devices.

More in detail, the invention relates to a saliva ejector cannula.

### Background art

To eliminate excess salivation in the patient that occurs during particularly long or complex dental treatments a specific saliva ejector cannula, connected to a suction device, is inserted into the patient's mouth.

Commonly used saliva ejector cannulas consist of a small tube, made of medical grade plastic, provided at one end with a filtering tip, made of the same material, and integrating in its depth a metal wire, having the purpose of allowing the tube to be bent to adapt to the patient's mouth during use.

These cannulas have important limits and disadvantages, as:
- insertion of the metal wire into the thickness of the tube produces cannulas of increased thickness, resulting in the use of larger amounts of plastic material and in an increase of complexity and production costs;
- the joint use of plastic and metal material means that cannulas are difficult to recycle and also produces a large volume of resulting waste, as single use disposable cannulas are widely used:
   - the increased thickness of the cannulas reduces their suction section;
   - the effect of the curvature given to the cannulas by the metal wire is only temporary and, moreover, during bending the metal wire can break through and cause injury to tissue in the patient's mouth;
   - the use of filtering tips reduces the flexibility of the cannulas and prevents them from being bent in proximity of their end;
   - the use of removable filtering tips increases the risk of accidental detachment during use and the resulting risk of ingestion by the patient.

In order to overcome the limits and drawbacks of the prior art indicated above, the author of the present application filed the patent application for industrial invention LU2013A000003 on 05/02/2013, which describes a saliva ejector cannula comprising:
- a small tube, made of soft plastic material, having a first end connectable to a suction system of known type and a second free end adapted to occupy a patient's mouth;
- a plurality of corrugated portions arranged on said tube;
- a bow, made of hard plastic material, adapted to cooperate with a first corrugated portion of said tube to give the cannula a permanent U-shaped bend" during use;
- a filtering structure, arranged on the free end of said tube, adapted to cooperate with a second corrugated section of said tube, to be positioned and oriented so as to reach any point inside the patient's mouth.

This saliva ejector cannula only partly solves the limits and the drawbacks of the prior art indicated above, as it is characterized by the following criticalities:
- the tube and the bow of the cannula are made of plastic materials that cannot be sterilized in the autoclave and which consequently make the cannula single use in all its parts, thereby producing a considerable amount of waste from it;
- the bow determines the curvature of the first corrugated portion of the cannula by means of two collars attachable on two holding points, arranged at its ends, facilitating the occurrence of possible narrowing of the cannula at the top of the bend, thereby affecting its suction capacity;
- the limited cross section of the second corrugated portion of the cannula makes it not sufficiently rigid, compromising the stability of the positioning and/or the orientation of the suction structure of said cannula inside the patient's mouth;
- the contact of the filtering structure of the cannula with tissue of the patient's mouth can cause its partial blocking, with discomfort for the patient and a decrease in the suction capacity of said cannula.

EP 2 953 577 B1, discloses a saliva ejector cannula according to the preamble of claim 1.

### Presentation of the invention

The object of the present invention is to overcome the abovementioned criticalities.

The object is achieved with a saliva ejector cannula according to the main independent claim 1.

Further features of the saliva ejector cannula of the present invention are set forth in the dependent claims.

The saliva ejector cannula of the present invention provides numerous important advantages, as:
- by means of a bow made of metal material that can be sterilized in the autoclave, the cannula is partly re-usable, leading to a substantial reduction in the waste deriving therefrom;
- by means of said bow, which comprises an intermediate collar between the two end collars, and the presence of a smooth segment in the corrugated portion of the cannula adapted to be kept curved by means of said bow, the cannula can be curved on three holding points, preventing narrowing of the cannula from occurring at the top of the bend and thereby maintaining the suction capacities of said cannula;
- by means of a corrugated portion of the cannula with a larger cross section, it ensures that the position and orientation of the filtering structure of said cannula inside the patient's mouth is maintained;
- by means of a spacer element arranged on the free end of the cannula, it prevents the suction structure of said cannula from coming into contact with tissue of the patient's mouth, preventing annoying suction of tissue of the patient's mouth and possible decreases in the suction capacity of said cannula.

### Brief description of the drawings

Further features and advantages will be more apparent from the detailed description set forth below, with the aid of the drawings which show a preferred embodiment, illustrated by way of non-limiting example, wherein:

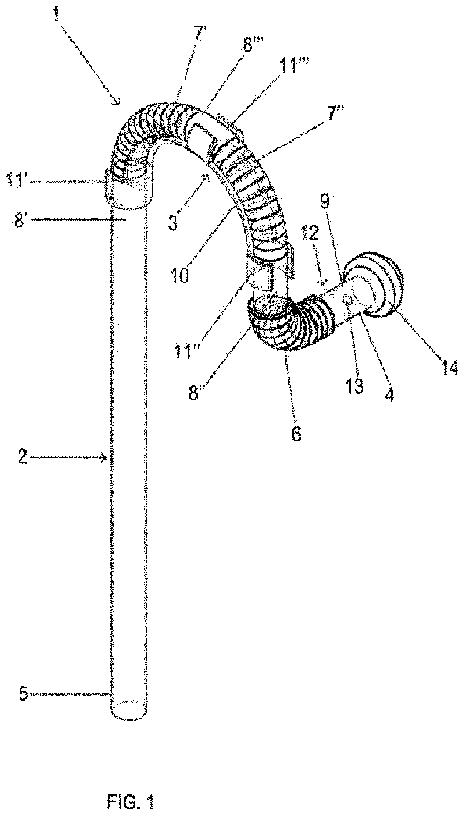

- Fig. 1 shows, in axonometric view, a saliva ejector cannula according to the invention;

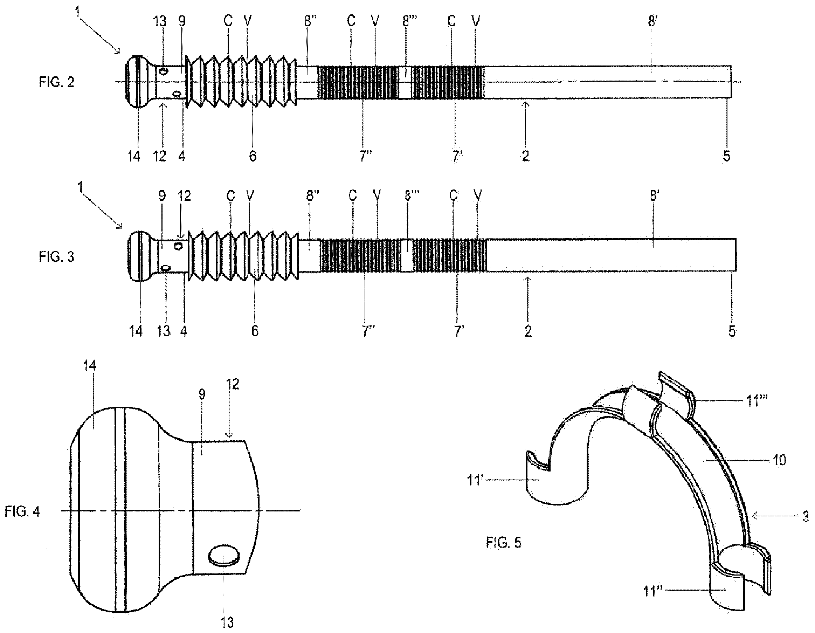

- Figs. 2-3 show, with opposite side views, the structural conformation of said saliva ejector cannula;
- Figs. 4-5 show, respectively in detail and in an axonometric view, a detail and a component of said saliva ejector cannula.

### Detailed description of a preferred embodiment of the invention

With reference to the details of the figures, a saliva ejector cannula 1 substantially comprises a small tube 2, made of non-toxic medical grade plastic material, and a bow 3, made of metal material advantageously suitable to be sterilized in an autoclave, adapted to give said tube 2 a permanent curvature during use.

The tube 2 comprises a first free end 4, adapted to occupy a patient's mouth, and a second end 5, adapted to be connected to a suction system of known type.

The tube 2 further comprises a first 6, a second 7' and a third 7" corrugated portion, each portion being similar to a bellows that has a "creased" appearance on the outside.

Therefore, all the corrugated portions have crests C and troughs V which in the first corrugated portion 6 are more accentuated and spaced farther apart with respect to those of the second 7' and third 7" corrugated portion, which are less accentuated and spaced closer together.

The first corrugated portion 6 is provided on the tube 2 close to the free end 4, from which it is separated by a smooth portion 9, and has a larger cross section with respect to said tube 2.

This first corrugated portion 6 is jointed and extensible by means of traction to allow the free end 4 of the tube 2 of the cannula 1 to reach any point of the patient's mouth and to be arranged parallel to the mandibular axis of said patient. Advantageously, the larger cross section of said first corrugated portion 6 causes an overall stiffening thereof, such as to facilitate maintaining a stable position and orientation of the free end 4 of the tube 2 of the cannula 1 inside the patient's mouth.

The second 7' and the third 7" corrugated portion are provided on the tube 2 in a proximal position with respect to the end 5 connectable to a suction system, with respect to the first corrugated portion 6, and are preceded, followed and spaced by corresponding smooth portions 8', 8", 8‴ of said tube 2.

The second 7' and the third 7" corrugated portion have respective cross sections substantially equivalent to the tube 2.

The bow 3 comprises a cradle 10 and three collars 11', 11", 11‴, two of which positioned at opposite ends and one that is intermediate placed at the top. Advantageously, the three collars 11', 11", 11‴ cooperate with the corresponding three smooth sections 8', 8", 8‴ of the tube 2 to determine bending of its corrugated portions 7', 7" inside the cradle 10, so as to give the cannula 1 a stable inverted U-shaped bend and at the same time prevent narrowing that would decrease the suction capacity of said cannula 1 from occurring at the top of the bend.

The cradle 8 is adapted to longitudinally contain the second 7' and the third 7" corrugated section of the tube 2 so as to give the cannula 1 the correct inverted U-shape required for operation. The cradle 8 also has an extension such as to accommodate the second 7' and the third 7" corrugated portion of the tube 2, determined by their U-shaped bend, so that the three collars 11', 11", 11‴ of the bow 3 surround the corresponding smooth portions 8', 8", 8‴ of said tube 2, which having greater stiffness consequently provide a more permanent connection.

The free end 4 of the tube 2 of the cannula 1 comprises a filtering structure 12 produced directly and in one piece on the lateral surface thereof.

The free end 4 of the tube 2 of the cannula 1 is formed by a smooth portion 9 of tube 2, partly affected by a series of openings obtained on the lateral surface thereof. These openings are produced with holes 13 suitably arranged close to the free end 4, along its lateral surface, without involving its edge. In alternative variants, the holes 13 can be replaced by slits or longitudinal cuts.

The free end 4 of the tube 2 of the cannula 1 further comprises a spacer 14, having a larger cross section with respect to said tube 2 and substantially equivalent to the first corrugated portion 6 of the tube 2. Advantageously, said spacer 14 prevents the holes 13 of the suction structure 12 from coming into contact with tissue of the patient's mouth, thereby preventing annoying suction of tissue of the patient's mouth and possible decreases in the suction capacity of said cannula 1.

The use of the saliva ejector cannula 1 of the present invention is described below.

The cannula 1 is supplied to operators in a kit, enclosed in a sterile bag containing the tube 2 and the bow 3 separated from each other.

The dentist takes the tube 2, bends the second 7' and the third 7" corrugated portion and arranges it along the cradle 10 of the bow 3, taking care to secure the three smooth portions 8', 8", 8‴ of the tube 2 inside the two end collars 11', 11" and the top collar 11‴, applying light pressure on the tube 2.

After bending the cannula 1 stably, the operator connects it to the suction device.

Subsequently, the dentist, stretching the first corrugated portion 6 of the tube 2 of the cannula 1, rotating it and tilting it according to need, can reach with the free end 4, provided with the filtering structure 12 and with the spacer 14, any point of the patient's mouth and hence start the saliva suction phase, which can continue comfortably and uninterruptedly for the whole of the duration of the intervention, positioning the cannula straddling the patient's lower lip, using the outside of the cradle 10 of the bow 3 as supporting surface.

## Claims

1. Saliva ejector cannula (1) comprising:
- a tube (2) made of plastic material, having a first free end (4), adapted to occupy a patient's mouth, and a second end (5), adapted to be connected to a suction system of known type;
- a bow (3) adapted to be associated with said tube (2) to determine a stable substantially U-shaped bend of said tube (2), comprising two end collars (11', 11"),
**characterized in that** said tube (2) comprises:
- a first corrugated portion (6);
- a second (7') and a third (7") corrugated portion,
where said second (7') and said third (7") corrugated portion are preceded, followed and spaced by smooth portions (8', 8", 8‴) of the tube (2),
and **in that** said bow (3) further comprises an intermediate top collar (11‴),
where said collars (11', 11", 11‴) are adapted to surround the smooth portions (8', 8", 8") of said tube (2) respectively before, after and between said second (7') and said third (7") corrugated portion.

2. Saliva ejector cannula (1) according to claim 1, **characterized in that** said first corrugated portion (6) has a larger average cross section with respect to said tube (2).

3. Saliva ejector cannula (1) according to claim 1, **characterized in that** said first corrugated portion (6) is arranged between said first free end (4) and said third (7") corrugated portion.

4. Saliva ejector cannula (1) according to claim 3, **characterized in that** a smooth portion (9) of the tube (2) is arranged between said first corrugated portion (6) and said free end (4).

5. Saliva ejector cannula (1) according to claim 1, **characterized in that** said second (7') and third (7") corrugated portion have respective average cross sections substantially equivalent to said tube (2).

6. Saliva ejector cannula (1) according to claim 1, **characterized in that** said bow (3) comprises a cradle (10) adapted to longitudinally contain said second (7') and said third (7") corrugated portion.

7. Saliva ejector cannula (1) according to claim 1, **characterized in that** the end (4) of the cannula 1 comprises a spacer (14), having a larger cross section with respect to the tube (2) and substantially equivalent to the first corrugated portion (6).

8. Saliva ejector cannula (1) according to claim 1, **characterized in that** said second (7') and said third (7") corrugated portion are arranged in a proximal position with respect to said second end (5) of the cannula (1) connectable to a suction system, with respect to said first corrugated portion (6).

9. Saliva ejector cannula (1) according to claim 1, **characterized in that** said first free end (4) of the cannula (1) comprises a filtering structure (12) obtained on the lateral surface thereof.

10. Saliva ejector cannula (1) according to claim 9, **characterized in that** said filtering structure (12) comprises a plurality of holes (13) or of openings in general.

## Patentansprüche

1. Speichelabsaugkanüle (1), folgendes umfassend:
- ein Rohr (2) aus Kunststoffmaterial mit einem ersten freien Ende (4), das dazu vorgesehen ist, den Mund eines Patienten zu füllen, und einem zweiten Ende (5), das dazu vorgesehen ist, mit einem Absaugsystem bekannter Art verbunden zu werden;
- ein Bügel (3), der dazu vorgesehen ist, mit dem Rohr (2) verbunden zu werden, um eine stabile, im Wesentlichen U-förmige Biegung des Rohrs (2) zu bestimmen, mit zwei Endmanschetten (11', 11"),
**dadurch gekennzeichnet, dass** das besagte Rohr (2) umfasst:
- einen ersten gewellten Abschnitt (6);
- einen zweiten (7') und einen dritten (7") gewellten Abschnitt, wobei der besagte zweite (7') und der besagte dritte (7") gewellte Abschnitt von glatten Abschnitten (8', 8", 8‴) des Rohrs (2) vorangestellt, gefolgt und getrennt sind,
und wobei der genannte Bogen (3) ferner eine mittlere obere Manschette (11"') umfasst,
wobei die besagten Manschetten (11', 11", 11‴) so angeordnet sind, dass sie die glatten Abschnitte (8', 8", 8") des besagten Rohrs (2) jeweils vor, nach und zwischen dem zweiten (7') und dem dritten (7") gewellten Abschnitt umgeben.

2. Speichelabsaugkanüle (1) gemäß Anspruch 1, **dadurch gekennzeichnet, dass** der besagte erste gewellte Abschnitt (6) einen größeren durchschnittlichen Querschnitt in Bezug auf das besagte Rohr (2) aufweist.

3. Speichelabsaugkanüle (1) gemäß Anspruch 1, **dadurch gekennzeichnet, dass** der besagte erste gewellte Abschnitt (6) zwischen dem besagten ersten freien Ende (4) und dem besagten dritten gewellten Abschnitt (7") angeordnet ist.

4. Speichelabsaugkanüle (1) gemäß Anspruch 3, **dadurch gekennzeichnet, dass** ein glatter Abschnitt (9) des Rohrs (2) zwischen dem besagten ersten gewellten Abschnitt (6) und dem besagten freien Ende (4) angeordnet ist.

5. Speichelabsaugkanüle (1) gemäß Anspruch 1, **dadurch gekennzeichnet, dass** der besagte zweite (7') und dritte (7") gewellte Abschnitt jeweils durchschnittliche Querschnitte aufweisen, die im Wesentlichen denen des besagten Rohrs (2) entsprechen.

6. Speichelabsaugkanüle (1) gemäß Anspruch 1, **dadurch gekennzeichnet, dass** der besagte Bogen (3) eine Halterung (10) umfasst, die dazu ausgelegt ist, den besagten zweiten (7') und den besagten dritten (7") gewellten Abschnitt in Längsrichtung aufzunehmen.

7. Speichelabsaugkanüle (1) gemäß Anspruch 1, **dadurch gekennzeichnet, dass** das Ende (4) der Kanüle (1) einen Abstandshalter (14) umfasst, der einen größeren Querschnitt als der Schlauch (2) aufweist und im Wesentlichen dem ersten gewellten Abschnitt (6) entspricht.

8. Speichelabsaugkanüle (1) gemäß Anspruch 1, **dadurch gekennzeichnet, dass** der besagte zweite (7') und der besagte dritte (7") gewellte Abschnitt in einer proximalen Position in Bezug auf das besagte zweite Ende (5) der Kanüle (1), die mit einem Absaugsystem verbunden werden kann, in Bezug auf den besagten ersten gewellten Abschnitt (6) angeordnet sind.

9. Speichelabsaugkanüle (1) gemäß Anspruch 1, **dadurch gekennzeichnet, dass** das besagte erste freie Ende (4) der Kanüle (1) eine Filterstruktur (12) umfasst, die auf ihrer Seitenfläche gebildet ist.

10. Speichelabsaugkanüle (1) gemäß Anspruch 9, **dadurch gekennzeichnet, dass** die besagte Filterstruktur (12) eine Vielzahl von Löchern (13) oder Öffnungen im Allgemeinen umfasst.

## Revendications

1. Canule d'éjecteur de salive (1) comprenant :
- un tube (2) en matière plastique, comportant une première extrémité libre (4), adaptée pour occuper la bouche d'un patient, et une seconde extrémité (5), adaptée pour être raccordée à un système d'aspiration de type connu ;
- un arc (3) adapté pour être associé audit tube (2) afin de déterminer une courbure stable sensiblement en forme de U dudit tube (2), comprenant deux colliers d'extrémité (11', 11"),
**caractérisée par le fait que** ledit tube (2) comprend :
- une première partie ondulée (6) ;
- une deuxième (7') et une troisième (7") parties ondulées,
où ladite deuxième (7') et ladite troisième (7") parties ondulées sont précédées, suivies et espacées par des parties lisses (8', 8", 8‴) du tube (2),
et **par le fait que** ledit arc (3) comprend en outre un collier supérieur intermédiaire (11‴),
où lesdits colliers (11', 11", 11‴) sont adaptés pour entourer les parties lisses (8', 8", 8") dudit tube (2) respectivement avant, après et entre ladite deuxième (7') partie ondulée et ladite troisième (7") partie ondulée.

2. Canule d'éjecteur de salive (1) selon la revendication 1, **caractérisée par le fait que** ladite première partie ondulée (6) présente une section transversale moyenne plus grande par rapport audit tube (2).

3. Canule d'éjecteur de salive (1) selon la revendication 1, **caractérisée par le fait que** ladite première partie ondulée (6) est disposée entre ladite première extrémité libre (4) et ladite troisième (7") partie ondulée.

4. Canule d'éjecteur de salive (1) selon la revendication 3, **caractérisée par le fait qu'**une partie lisse (9) du tube (2) est disposée entre ladite première partie ondulée (6) et ladite extrémité libre (4).

5. Canule d'éjecteur de salive (1) selon la revendication 1,
**caractérisée par le fait que** lesdites deuxième (7') et troisième (7") parties ondulées ont des sections transversales moyennes respectives sensiblement équivalentes à celles dudit tube (2).

6. Canule d'éjecteur de salive (1) selon la revendication 1, **caractérisée par le fait que** ledit arc (3) comprend un berceau (10) adapté pour contenir longitudinalement ladite deuxième (7') et ladite troisième (7") parties ondulées.

7. Canule d'éjecteur de salive (1) selon la revendication 1,
**caractérisée par le fait que** l'extrémité (4) de la canule (1) comprend une entretoise (14) ayant une section transversale plus grande par rapport au tube (2) et sensiblement équivalente à la première partie ondulée (6).

8. Canule d'éjecteur de salive (1) selon la revendication 1, **caractérisée par le fait que** lesdites deuxième (7') et troisième (7") parties ondulées sont disposées dans une position proximale par rapport à ladite deuxième extrémité (5) de la canule (1) pouvant être raccordée à un système d'aspiration, par rapport à ladite première partie ondulée (6).

9. Canule d'éjecteur de salive (1) selon la revendication 1, **caractérisée par le fait que** ladite première extrémité libre (4) de la canule (1) comprend une structure filtrante (12) obtenue sur sa surface latérale.

10. Canule d'éjecteur de salive (1) selon la revendication 9, **caractérisée par le fait que** ladite structure filtrante (12) comprend une multitude de trous (13) ou d'ouvertures en général.
